# EUROPEAN PATENT SPECIFICATION

(11) **EP 3 602 518 B1**
(45) Date of publication and mention of the grant of the patent: **28.06.2023**
(21) Application number: 18717477.6
(22) Date of filing: 23.03.2018
(51) Int. Cl.: G08G 1/16, B60W 30/10, B60W 30/12

(54) **CONTROLLER AND METHOD OF SETTING AN INTERVENTION ZONE IN A LANE DEPARTURE WARNING SYSTEM**
STEUERGERÄT UND VERFAHREN ZUR EINSTELLUNG EINER EINGRIFFSZONE IN EINEM SPURHALTUNGSWARNSYSTEM
ORGANE DE COMMANDE ET PROCÉDÉ DE DÉFINITION D'UNE ZONE D'INTERVENTION DANS UN SYSTÈME D'AVERTISSEMENT DE SORTIE DE VOIE

(30) Priority: 24.03.2017 US 201715468320
(43) Date of publication of application: 05.02.2020
(73) Proprietor: Bendix Commercial Vehicle Systems, LLC, Elyria, Ohio 44035 (US)
(72) Inventor: AMATO, William P., Elyria Ohio 44035 (US); BROYLES, Nicholas A., Elyria Ohio 44035 (US); PILKINGTON,Andrew J., Elyria Ohio 44035 (US)
(74) Representative: Wiedemann, Markus
(86) International application number: PCT/US2018/023913
(87) International publication number: WO 2018/175823

(56) References cited:
- WO-A1-2016/031036
- DE-A1-102009 050 941
- US-A1- 2009 284 360
- US-A1- 2010 002 911
- US-A1- 2016 111 005
- US-A1- 2017 274 898

## Description

The present invention relates to A method for controlling a host vehicle having a driver assistance system. A typical lane departure warning system includes a camera for tracking lane markers and an alert system for notifying a driver when he drifts over a lane marker without activating a turning signal. The forward looking camera has a narrow view of the road ahead from its mounting location on the windshield of the vehicle and does not generally detect objects to the sides of the vehicle. A typical side object detection system includes a radar mounted on the side of the vehicle that can detect metallic objects up to about ten feet to the side of the vehicle. In most vehicles, the lane departure warning system and side object detection systems are separate systems operating independently to assist the driver. There is a desire for an improved method for lane departure warning that takes advantage of side object detection capabilities.

A method according to the preamble of claim 1 is disclosed in US 2017/0274898 A1. There, a lane change assist system is configured to determine a distance between a lane marking and the host vehicle. If a warning threshold is exceeded, an operator is alerted to a potential improper lane change. Further, a warning zone is defined by earliest and latest warning lines. With respect to lane change assist, the system is operable to deliver a warning to the operator when the presence of an object is detected by a lidar or radar device. In this regard, the lane-marking is not considered. It is an object of the invention to provide a method that is more related to specific traffic situations. This object is solved by the features of claim 1.

### Summary

The invention discloses a method for controlling a host vehicle having a driver assistance system (10) comprising the following steps: identifying a lane marker in response to a video signal; setting a first zone with respect to the lane marker, said first zone extending from the lane marker a distance away from said identified lane marker on the distal side of the lane marker with respect to the host vehicle; determining by the driver assistance system if the host vehicle is moving into the first zone using a camera controller; and if it is determined that the host vehicle is moving into the first zone without activating a turn signal, then a first alert is transmitted to a display, and while the camera controller monitors the motion of the host vehicle, a side radar controller of the host vehicle monitors for obstacles or other vehicles; and determining by the driver assistance system if an obstacle in response to a detection by the side radar controller of the host vehicle is identified; and if an obstacle is identified, a second zone with respect to the lane marker in response to the obstacle detection is set, wherein the second zone extends from said identified lane marker a distance between said identified lane marker on the proximate side of the lane marker towards the vehicle; and determining by the driver assistance system if the host vehicle is entering the second zone; and if it is determined that the host vehicle is entering the second zone transmitting a second alert in response to the host vehicle entering the second zone to the display, wherein the first alert for the host vehicle entering the first zone is different than the second alert transmitted when the host vehicle enters the second zone.

### Brief Description of the Drawings

In the accompanying drawings which are incorporated in and constitute a part of the specification, embodiments of the invention are illustrated, which, together with a general description of the invention given above, and the detailed description given below, serve to exemplify the embodiments of this invention.
**FIGURE 1** illustrates a system according to one example of the present invention.
**FIGURES 2A and 2B** illustrate a vehicle on a roadway having a system according to the present invention.

### Detailed Description

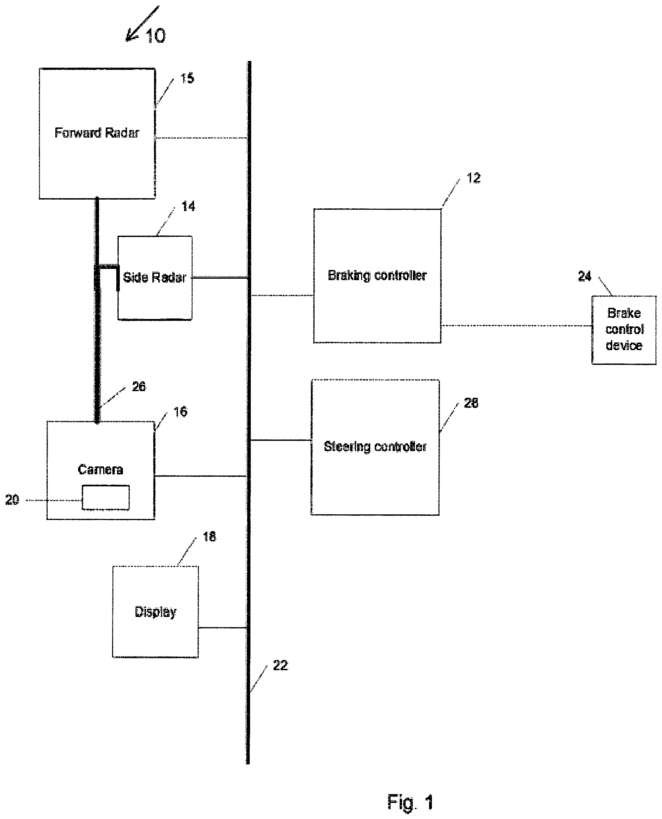

**FIGURE 1** illustrates a driver assistance system (DAS) **10** for a commercial vehicle according to one example of the present invention. The DAS **10** includes a camera controller **16** for implementing functions of DAS **10.** The camera controller **16** includes inputs for receiving video signals to detect lane markings in the field of view of the camera controller **16.** The camera controller **16** may be the type as used in an Autovue^{®} Lane Departure Warning System available from Bendix Commercial Vehicle Systems LLC, Elyria Ohio. The camera controller **16** is generally mounted on the windshield of the commercial vehicle. The camera controller **16** may detect dashed lines, solid lines or Botts' dots indicating lane markings or berm markings on a roadway. The camera controller **16** is generally pre-programmed with the width of the commercial vehicle on which the camera controller **16** is mounted.

The DAS **10** includes a side radar controller **14.** The side radar controller **14** may be the type as used in the Blindspotter^{®} Side Object Detection System available from Bendix Commercial Vehicle Systems LLC, Elyria Ohio. A side radar controller **14** may be mounted on the passenger side of the commercial vehicle, monitoring a typical vehicle blindspot. A second side radar controller (not shown) may be mounted on the driver side of the commercial vehicle to provide additional monitoring around the vehicle. The side radar controller **14** includes an input for receiving radar signals indicative of metallic objects, such as other vehicles and guard rails, in the field of view of the side radar controller **14.** Alternatively, a second camera controller may be used in place of the side radar controller **14** in order to detect objects to the side of the commercial vehicle.

The DAS **10** may include a forward radar controller **15.** The forward radar controller **15** receives radar signals indicative of objects to the front of the commercial vehicle and provides functionality such as adaptive cruise control with braking. The forward radar controller **15** may be the type as used in the Wingman^{®} Advanced^{™} adaptive cruise with braking system available from Bendix Commercial Vehicle Systems LLC, Elyria Ohio.

The camera controller **16** includes a processor with control logic **20** for analyzing video signals and receiving and transmitting messages in response to the analysis of the video signals. The control logic **20** may also perform functions for vehicle control. The control logic **20** may include volatile, non-volatile memory, solid state memory, flash memory, random-access memory (RAM), read-only memory (ROM), electronic erasable programmable read-only memory (EEPROM), variants of the foregoing memory types, combinations thereof, and/or any other type(s) of memory suitable for providing the described functionality and/or storing computer-executable instructions for execution by the control logic **20.** Alternatively, the forward radar controller **15** or the side radar controller **14** contain control logic for performing vehicle control in response to video signals or radar signals.

Each of the camera controller **16,** the front radar controller **15** and the side radar controller **14** include a communications port for communicating via a proprietary communications bus **26.** Each controller is capable of transmitting and receiving messages indicative of lane markers and obstacles. Each of the camera controller **16,** front radar controller **15** and the side radar controller **14** include a port for communicating with other controllers on the vehicle via a vehicle serial communications bus **22.** The serial communications bus **22** may use the SAE J1939 protocol or other vehicle communications protocol. Alternatively, each controller communicates only with the vehicle serial communications bus **22,** eliminating the proprietary communications bus **26.**

The DAS **10** may also include a display **18.** The display **18** indicates to the driver the status of the DAS **10,** including object detection and fault codes. The indication may include audible indicators, visual indicators or a combination of both. The display **18** communicates with the serial communications bus **22** or may be directly connected to the camera controller **16.** The display **18** may be dedicated to functions of the DAS **10** or may receive and communicate messages from other vehicle systems when connected to the serial communications bus **22.**

The DAS **10** communicates with a brake controller **12** using the serial communications bus **22.** The brake controller **12** may automatically perform vehicle control functions in response to the messages received from the DAS **10** and may also perform antilock braking and other braking functions. The brake controller **12** communicates with at least one brake control device **24** to implement braking at each wheel end.

The DAS **10** communicates with a steering system controller **28** using the serial communications bus **22.** The steering controller **28** automatically controls the steering to affect the direction in which the vehicle is moving.

Therefore, an apparatus for a controller for a driver assistance system on a host vehicle comprise an input for receiving a video signal; an input for receiving a signal indicative of an obstacle; an alert output for transmitting an alert; and control logic. The control logic is capable of identifying a lane marker in the video signal; setting a first zone with respect to the lane marker; receiving a signal indicative of an obstacle; setting a second zone with respect to the lane marker in response to the obstacle; and transmitting an alert at the alert output in response to the host vehicle entering the second zone.

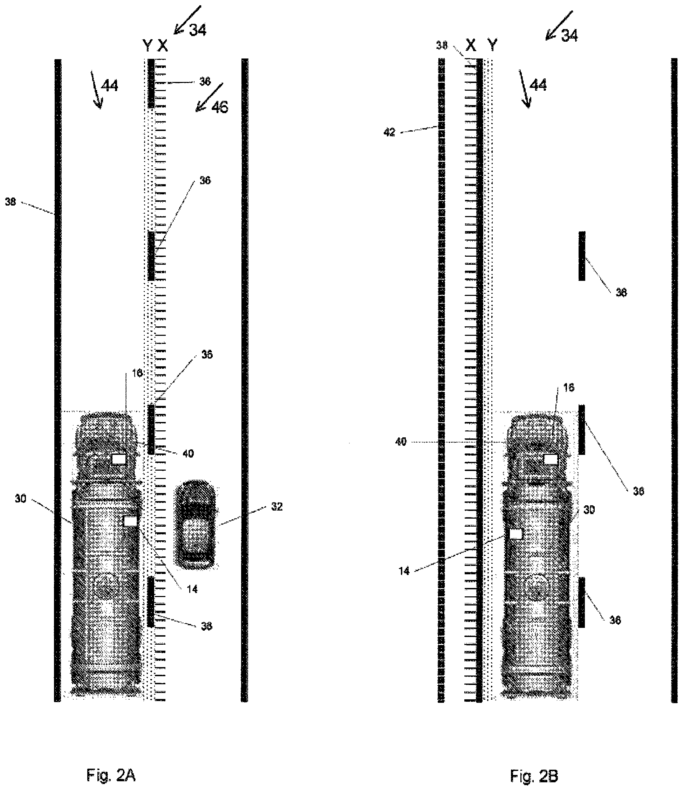

**FIGURE 2A** illustrates a two lane roadway **34** having a host vehicle **30,** equipped with the DAS **10,** and a target vehicle **32.** The host vehicle **30** and the target vehicle **32** are traveling in the same direction on the roadway **34.** The host vehicle **30** is traveling in lane **44** and the target vehicle **32** is traveling in lane **46.**

In this example, the camera controller **16** detects the center line lane markings **36** between lane **44** and lane **46** and the berm marking **38** according to known operation of the camera controller **16.** The markings **36, 38** may be Botts' dots, solid lines or dashed lines. The camera controller **16** sets a first zone X (shown as dashed zones in Figure 2A) based on the center line lane markings **36.** The first zone X may begin at the center line lane . markings **36** and extend about six inches to the right of the center line lane markings **36.**

Since the camera controller **16** knows the width of the host vehicle **30,** the camera controller **16** can approximate the location of a wheel edge **40** of the host vehicle **30.** If no target vehicle or other obstacle is detected by the side radar controller **14,** the camera controller **16** continues to monitor the motion of the host vehicle **30.** When the camera controller **16** determines that the wheel edge **40** of the host vehicle **30** has crossed over the center line lane markings **36** and into the first zone X and no turn signal was enabled, a message will be sent on the vehicle communications bus **22** to the display device **18.** The display device **18** will give a visual or audible alert to the driver of the host vehicle **30** so that he can manually return the host vehicle **30** to the lane **44** if he did not intend to travel to the adjacent lane **46.**

While the camera controller **16** is monitoring the motion of the host vehicle **30,** the side radar controller **14** continues to monitor for obstacles or other vehicles in lane **46.** In one example, the side radar controller **14** will detect the target vehicle **32** according to the known operation of the side radar controller **14.** The side radar controller **14** determines the lateral distance between the host vehicle **30** and the target vehicle **32.** The side radar controller **14** transmits the message indicating the detection and location of the target vehicle **32** to the camera controller **16** via the proprietary communications bus **26.**

The control logic **20** of the camera controller **16** then sets a second zone Y (shown as the dotted zone in Figure 2A). The second zone Y is closer laterally to the host vehicle **30** than the first zone X. In one example, the second zone Y begins at about three inches to the left of the lane markings **36.** The second zone Y remains set as long as the target vehicle **32** remains detected by the side radar controller **14.**

In another example, the second zone Y may partially overlap the first zone X. In another example, the second zone Y is set according to the lateral distance between the target vehicle **32** and host vehicle **30** and changes according to the detected lateral movement of the target vehicle **32.** In another example, the second zone Y is set based on the detected size of the target vehicle **32.**

When the wheel edge **40** of the host vehicle **30** crosses into second zone Y, the camera controller **16** transmits a message to the display device **18** regardless of whether the turn signal is enabled. The display **18** transmits a visual or audible alert. In this manner, the driver of the host vehicle **30** receives a prompt warning earlier that he is about to drift into the path of the target vehicle **32.** The driver can then make manual adjustments earlier to avoid a collision.

In another example, the camera controller **16** transmits a message to the brake controller **12** when the host vehicle **30** enters the second zone Y. The braking controller **12** will then transmit a signal to the brake control device **24** to automatically initiate braking to avoid a collision. Alternatively, the camera controller **16** transmits the message to the brake controller **12** when the host vehicle **30** leaves the second zone Y and enters the previously set first zone X.

In another example, the camera controller **16** transmits a message to the steering controller **28** when the host vehicle **30** enters the second zone Y. The steering controller **28** will then automatically control the steering to maintain the host vehicle **30** in lane **44.** Alternatively, the camera controller **16** transmits the message to the steering controller **28** when the host vehicle **30** leaves the second zone Y and enters the previously set first zone X.

In another example, the camera controller **16** transmits a message to the display **18** and the audible and/or visual signal is modified. In one example, the display **18** may increase the frequency, volume or pitch of the audible signal to indicate a possible collision with the target vehicle **32.** In another example, the display **18** may activate a light at a higher frequency to indicate a possible collision with the target vehicle **32.** Alternatively, the camera controller **16** transmits the message to modify the alert when the host vehicle **30** leaves the second zone Y and enters the previously set first zone X.

**FIGURE 2B** illustrates the two lane roadway **34** having the host vehicle **30,** equipped with the DAS **10.** In this example, the host vehicle **30** includes a side radar controller **14** mounted on the driver's side of the host vehicle **30.** The camera controller **16** detects the edge of road, or berm markings **38** according to known operation of the camera controller **16.** The camera controller **16** sets a first zone X (shown as a dashed zone in Figure 2B) based on the markings **38.** The first zone X may begin at the berm markings **38** and extend about six inches to the left of the berm markings **38.**

If no obstacle is detected by the side radar controller **14,** when the camera controller **16** indicates that a wheel edge **40** of the host vehicle **30** has crossed over the berm markings **38** into the first zone X, a message will be sent on the vehicle communications bus **22** to the display device **18.** The display device **18** will give a visual or audible alert to the driver of the vehicle so that he can return the vehicle to the lane **44.**

In this example, the side radar controller **14** will detect the obstacle, such as guard rails **42,** to the left of the host vehicle **30,** according to the known operation of the side radar controller **14.** The side radar controller **14** determines the lateral distance between the host vehicle **30** and the guard rails **42.** The side radar controller **14** transmits the message indicating the detection and location of the guard rails **42** to the camera controller **16** via the proprietary communications bus **26.**

The control logic **20** of the camera controller **16** sets a second zone Y (shown as a dotted zone in Figure 2B). The second zone Y begins to the left of the host vehicle **30** and at about six inches to the right of the berm markings **38.** The second zone Y remains set as long as the guard rails **42** remain detected by the side radar controller **14.**

When a wheel edge **40** of the host vehicle **30** enters into second zone Y, the camera controller **16** transmits a message to the display device **18** regardless of whether the turn signal is enabled. In this manner, the driver of the host vehicle **30** receives a prompt warning earlier that he is about to drift past the berm marking **38** and into the guard rails **42.** The driver can then make manual adjustments earlier to avoid a collision.

In another example, the camera controller **16** transmits a message to the brake controller **12** when the wheel edge **40** of the host vehicle **30** enters the second zone Y. The braking controller **12** will then transmit a signal to the brake control device **24** to automatically initiate braking to avoid a collision. Alternatively, the camera controller **16** transmits the message to the brake controller **12** when the host vehicle **30** leaves the second zone Y and enters the previously set first zone X.

In another example, the camera controller **16** transmits a message to the steering controller **28** when the host vehicle **30** enters the second zone Y. The steering controller **28** will then automatically control the steering to maintain the host vehicle **30** in lane **44.** Alternatively, the camera controller **16** transmits the message to the steering controller **28** when the host vehicle **30** leaves the second zone Y and enters the previously set first zone X.

In another example, the camera controller **16** transmits a message to the display **18** and the audible and/or visual signal is modified. In one example, the display **18** may increase the frequency of the audible signal to indicate a possible collision. In another example, the display **18** may blink a light at a higher frequency to indicate a possible collision. Alternatively, the camera controller **16** transmits the message to modify the alert when the host vehicle **30** leaves the second zone Y and enters the previously set first zone X.

Therefore, a method for controlling a host vehicle having a driver assistance system comprise identifying a lane marker in response to a video signal and setting a first zone with respect to the lane marker. The method further comprises identifying an obstacle in response to a radar signal; setting a second zone with respect to the lane marker in response to the obstacle detection; determining the host vehicle is entering the second zone; and transmitting an alert in response to the host vehicle entering the second zone.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects, is not limited to the specific details, the representative apparatus, and illustrative examples shown and described.

## Claims

1. A method for controlling a host vehicle (30) having a driver assistance system (10) comprising the following steps:
a) identifying a lane marker (36;38) in response to a video signal;
b) setting a first zone (X) with respect to the lane marker (36; 38), said first zone (X) extending from the lane marker (36; 38) a distance away from said identified lane marker (36; 38) on the distal side of the lane marker (36; 38) with respect to the host vehicle (30);
c) determining by the driver assistance system (10) if the host vehicle (30) is moving into the first zone (X) using a camera controller (16), **characterized in that**
d) if it is determined that the host vehicle (30) is moving into the first zone (X) without activating a turn signal, then a first alert is transmitted to a display, and
e) while the camera controller (16) monitors the motion of the host vehicle (30), a side radar controller (14) of the host vehicle monitors for obstacles or other vehicles,
f) determining by the driver assistance system (10) if an obstacle (32; 42) in response to a detection by the side radar controller (14) of the host vehicle (30) is identified; and
g) if an obstacle (32; 42) is identified, a second zone (Y) with respect to the lane marker (36; 38) in response to the obstacle detection is set, wherein the second zone (Y) extends from said identified lane marker (36;38) a distance between said identified lane marker (36;38) on the proximate side of the lane marker (36;38) towards the vehicle (30); and
h) determining by the driver assistance system (10) if the host vehicle (30) is entering the second zone (Y); and if it is determined that the host vehicle (30) is entering the second zone (Y) transmitting a second alert in response to the host vehicle (30) entering the second zone (Y) to the display, wherein
i) the first alert for the host vehicle (30) entering the first zone is different than the second alert transmitted when the host vehicle (30) enters the second zone (Y).

2. The method as in claim 1, further comprising autonomously applying the service brakes in response to the host vehicle (30) entering the second zone (Y).

3. The method as in claim 1, further comprising autonomously steering the host vehicle (30) in response to the host vehicle (30) entering the second zone (Y).

4. The method as in claim 1, wherein determining the first zone (X) and the second zone (Y) comprises using a sensor (14) mounted on the side of the host vehicle (30).

## Patentansprüche

1. Verfahren zum Steuern eines Hostfahrzeugs (30) mit einem Fahrerassistenzsystem (10), umfassend die folgenden Schritte:
a) Identifizieren einer Spurmarkierung (36; 38) als Reaktion auf ein Videosignal;
b) Einstellen einer ersten Zone (X) bezüglich der Spurmarkierung (36; 38), wobei sich die erste Zone (X) von der Spurmarkierung (36; 38) um eine Distanz weg von der identifizierten Spurmarkierung (36; 38) auf der distalen Seite der Spurmarkierung (36; 38) bezüglich des Hostfahrzeugs (30) erstreckt;
c) Bestimmen durch das Fahrerassistenzsystem (10), ob sich das Hostfahrzeug (30) in die erste Zone (X) bewegt, unter Verwendung eines Kameracontrollers (16), **dadurch gekennzeichnet, dass**
d) falls bestimmt wird, dass sich das Hostfahrzeug (30) in die erste Zone (30) bewegt, ohne ein Abbiegesignal zu aktivieren, dann eine erste Warnung zu einem Display übertragen wird, und
e) während der Kameracontroller (16) die Bewegung des Hostfahrzeugs (30) überwacht, ein Seitenradarcontroller (14) des Hostfahrzeugs auf Hindernisse oder andere Fahrzeuge überwacht,
f) Bestimmen durch das Fahrerassistenzsystem (10), ob ein Hindernis (32; 42) als Reaktion auf eine Detektion durch den Seitenradarcontroller (14) des Hostfahrzeugs (30) identifiziert wird; und
g) falls ein Hindernis (32, 42) identifiziert wird, eine zweite Zone (Y) bezüglich der Spurmarkierung (36; 38) als Reaktion auf die Hindernisdetektion eingestellt wird, wobei sich die zweite Zone (Y) von der identifizierten Spurmarkierung (36; 38) um eine Distanz zwischen der identifizierten Spurmarkierung (36; 38) auf der proximalen Seite der Spurmarkierung (36; 38) zu dem Fahrzeug (30) erstreckt; und
h) Bestimmen durch das Fahrerassistenzsystem (10), ob das Hostfahrzeug (30) in die zweite Zone (Y) eintritt; und falls bestimmt wird, dass das Hostfahrzeug (30) in die zweite Zone (Y) eintritt, Übertragen einer zweiten Warnung als Reaktion darauf, dass das Hostfahrzeug (30) in die zweite Zone (Y) eintritt, an das Display, wobei
i) die erste Warnung für das Hostfahrzeug (30), das in die erste Zone eintritt, von der zweiten Warnung, die übertragen wird, wenn das Hostfahrzeug (30) in die zweite Zone (Y) eintritt, verschieden ist.

2. Verfahren nach Anspruch 1, weiter umfassend das autonome Betätigen der Betriebsbremsen als Reaktion darauf, dass das Hostfahrzeug (30) in die zweite Zone (Y) eintritt.

3. Verfahren nach Anspruch 1, weiter umfassend das autonome Lenken des Hostfahrzeugs (30) als Reaktion darauf, dass das Hostfahrzeug (30) in die zweite Zone (Y) eintritt.

4. Verfahren nach Anspruch 1, wobei das Bestimmen der ersten Zone (X) und der zweiten Zone (Y) das Verwenden eines Sensors (14) umfasst, der auf der Seite des Hostfahrzeugs (30) montiert ist.

## Revendications

1. Procédé de commande d'un véhicule (30) hôte ayant un système (10) d'assistance à la conduite comprenant les stades suivants :
a) on identifie un marqueur (36 ; 38) de voie en réaction à un signal vidéo ;
b) on définit une première zone (X) par rapport au marqueur (36 ; 38) de voie, la première zone (X) s'étendant à partir du marqueur (36 ; 38) de voie à distance du marqueur (36 ; 38) de voie identifié du côté distal du marqueur (36 ; 38) de voie par rapport au véhicule (30) hôte ;
c) on détermine par le système (10) d'assistance à la conduite si le véhicule (30) hôte se déplace dans la première zone (X) en utilisant une unité (16) de contrôle à caméra, **caractérisé en ce que**
d) si il est déterminé que le véhicule (30) hôte se déplace dans la première zone (X) sans activer un clignotant, une première alerte est alors envoyée à un écran, et
e) pendant que l'unité (16) de contrôle à caméra contrôle le mouvement du véhicule (30) hôte, une unité (14) de contrôle latérale à radar contrôle la présence d'obstacles ou d'autres véhicules,
f) on détermine par le système (10) d'assistance à la conduite si un obstacle (32 ; 42) est identifié en réaction à une détection par l'unité (14) de contrôle latérale à radar du véhicule (30) hôte ; et
g) si un obstacle (32 ; 42) est identifié, on définit une deuxième zone (Y) par rapport au marqueur (36 ; 38) de voie en réaction à la détection de l'objet, dans lequel la deuxième zone (Y) s'étend à partir du marqueur (36 ; 38) de voie identifié vers le véhicule (30) sur une distance entre le marqueur (36 ; 38) de voie identifié du côté proche du marqueur (36 ; 38) de voie ; et
h) on détermine par le système (10) d'assistance à la conduite si le véhicule (30) hôte entre dans la deuxième zone (Y) ; et s'il est déterminé que le véhicule (30) hôte entre dans la deuxième zone (Y), on transmet une deuxième alerte à l'écran en réaction à l'entrée du véhicule (30) hôte dans la deuxième zone (Y), dans lequel
i) la première alerte pour l'entrée du véhicule hôte dans la première zone est différente de la deuxième alerte transmise quand le véhicule (30) hôte entre dans la deuxième zone (Y).

2. Procédé suivant la revendication 1, comprenant en outre l'application de manière autonome des freins de service en réaction à l'entrée du véhicule (30) hôte dans la deuxième zone (Y).

3. Procédé suivant la revendication 1, comprenant en outre la direction de manière autonome du véhicule (30) hôte en réaction à l'entrée du véhicule (30) hôte dans la deuxième zone (Y).

4. Procédé suivant la revendication 1, dans lequel la détermination de la première zone (X) et de la deuxième zone (Y) comprend l'utilisation d'un capteur (14) monté du côté du véhicule (30) hôte.
